# EUROPEAN PATENT APPLICATION

(11) **EP 1 592 022 A1**
(43) Date of publication of application: **02.11.2005**
(21) Application number: 05103272.0
(22) Date of filing: 22.04.2005
(51) Int. Cl.: G11B 27/32

(54) **Optical disc medium, optical disc apparatus using the same, and data recording method on the same**

(30) Priority: 27.04.2004 JP 2004131850
(71) Applicant: NEC CORPORATION, Tokyo (JP)
(72) Inventor: Yamanaka, Yutaka, Tokyo (JP)
(74) Representative: Betten & Resch

(57) **Abstract**

An optical disc medium includes a system area (22) in which system data are recorded, and a data area (23) in which user data are recorded. Said data area (23) includes a plurality of bordered areas (31) in which said user data are recorded, and a plurality of border areas (32) each of which separates adjacent two of said plurality of bordered areas (31). A most outer border area (32-3) is a finalization area, said most outer border area is one of said plurality of border areas (32) and placed at the most outer side, and said finalization area is an final area in which data are recorded.

## Description

### Background of the Invention

### 1. Field of the Invention

The present invention relates to a technique for recording a user data on an optical disc medium, and more particularly to an optical disc medium, an optical disc apparatus using the same, and a recording method on the same.

### 2. Description of the Related Art

In an optical disc field in which data are recorded and played by using a small optical beam, a ROM (Read Only Memory) medium for playback-only has been first widely spread, in which an embossed data pit string is formed. Then, a CD-R (Compact Disc-Recordable) and a DVD-R (Digital Versatile Disc-Recordable) are now widely spread, in which user data can be recorded. Also, optical disc media called CD-RW (CD-ReWritable) and DVD-RW (DVD-ReWritable) are known, to which data can be rewritten. Here, the optical disc media that the user data can be recorded are generically referred to as a recording type optical disc medium.

In the recording type optical disc medium, a spiral groove track is formed on an optical disc substrate, and a multi-layered recording layer made of an organic material and the like is formed thereon. A laser beam of high power is focused on this recording layer for changing the property of the recording layer to form a record pit. Thus, a data is recorded on the optical disc medium as the record pits. The optical disc medium after the recording operation has a same data format as the ROM medium, and a servo signal of the substantially same property as the ROM medium can be obtained form the optical disc medium on which the data recorded. Thus, the playback-only optical disc apparatus can carry out the playback of the recorded user data on the optical disc medium.

Also, in the DVD-R, a format of the user data are converted into a format in which a data ID such as an address, and an error correction code are added to the user data. Then, the user data are recorded as a series of continuous data on the optical disc medium. This continuous record format is the same format as that of the DVD-ROM.

However, if the optical disc medium is given the perfectly same format as the DVD-ROM, the user data can be recorded only once. Therefore, recording methods called a multi-session and a multi-border are adopted to permit the user data to be recorded additionally several times. In this case, a special data called a border area where data of a data position and the like are recorded is provided after the user data, and another user data are further recorded thereafter. A playing apparatus can play the user data by using the data position data.

In conjunction with the above description, the following techniques for writing data into a rewritable recording medium such as CD-RW or DVD-RAM are disclosed.

Japanese Laid Open Patent Application (JP-A 2000-504462) discloses a writing apparatus which includes a writing unit and a positioning unit. The writing unit writes a mark indicating a data block in an area of a recording medium with an electromagnetic emission beam, in order to write the data block on a track pattern of the rewritable recording medium. The positioning unit positions the writing unit in accordance with a track structure of the recording medium. The track structure has the track pattern. Such a writing apparatus has a first detecting unit, a second detecting unit and an initializing unit. The first detecting unit detects the area of the recording medium used to write the data block. The second detecting unit detects a non-written boundary area adjacent to the used area. The initializing unit writes a dummy data to the non-written boundary area.

Also, Japanese Laid Open Patent Application (JP-A 2000-504463) discloses a writing apparatus, which writes a data block to a track pattern on a writable recording medium. This writing apparatus includes a writing unit and a positioning unit. The writing unit writes a mark indicating a data block into the region of the recording medium with an electromagnetic emission beam. The positioning unit positions the writing unit on the recording medium in accordance with a track structure indicating a track pattern. This writing apparatus includes a state unit for generating a state data to indicate the fact that a write operation is carried out on at least one region of the recording medium. In the writing apparatus, the state data is extended from a start section of the track pattern region in which the data block is written, and has an initial region data for indicating an initial region to which it is written without any interruption.

### Summary of the Invention

An object of the present invention is to provide an optical disc medium, and an optical disc apparatus using the same, and a recording method on the same, in which a time for recording data can be reduced.

Another object of the present invention is to provide an optical disc medium, and an optical disc apparatus using the same, and a recording method on the same, in which larger amount of data can be recorded than before.

This and other objects, features and advantages of the present invention will be readily ascertained by referring to the following description and drawings.

In order to achieve an aspect of the present invention, the present invention provides an optical disc medium including: a system area in which system data are recorded, and a data area in which user data are recorded. The data area includes: a plurality of bordered areas in which the user data are recorded, and a plurality of border areas each of which separates adjacent two of the plurality of bordered areas. A most outer border area is a finalization area, the most outer border area is one of the plurality of border areas and placed at the most outer side, and the finalization area is a final area in which data are recorded.

In the optical disc medium, a finalization identifying data may be recorded in at least one of the plurality of border area. The finalization identifying data identifies that the most outer border area is the finalization area.

In the optical disc medium, each of the plurality of border area except for the finalization area may include a border-in area. The border-in area adjoins one of the plurality of bordered areas at an outer side and includes an area in which an area combination flag is recorded. The area combination flag indicates that whether or not an outer side adjacent one of the plurality of border area to an outer side adjacent one of the bordered area is the finalization area.

In the optical disc medium, an attribute data may be recorded in each of the plurality of the border area. The attribute data indicates a kind of recorded data. A first attribute data of the finalization area is different from a second attribute data of the plurality of border area except for the finalization area.

In the optical disc medium, the first attribute data may be a lead-out attribute data.

In the optical disc medium, each of the plurality of border area may include a border-out area. The border-out area adjoins one of the plurality of bordered areas at an inner side and includes an area in which a dummy data is recorded. A first dummy data of the finalization area is different from a second dummy data of the plurality of border area except for the finalization area.

In the optical disc medium, the first dummy data may be FF in hexadecimal notation.

In order to achieve another aspect of the present invention, the present invention provides an optical disc apparatus including: a rotation driving system configured to rotate an optical disc medium, an access section; and a control section configured to control the rotation driving system to rotate the optical disc medium. The control section is also configured to encode record data and to control the access section to irradiate a laser beam such that the encoded record data is recorded on the optical disc medium as the user data. The optical disc medium includes a system area, in which system data are recorded and a data area in which user data are recorded. The control section controls the access section such that the user data are recorded in a plurality of bordered areas in the data area, and such that each of a plurality of border areas separates adjacent two of the plurality of bordered areas. Also, the control section controls the access section such that a most outer border area is a finalization area. The most outer border area is one of the plurality of border areas and placed at the most outer side. The finalization area is an final area in which data are recorded. Also, the control section controls the access section such that a finalization identifying data is recorded in at least one of the plurality of border area. The finalization identifying data identifies that the most outer border area is the finalization area.

In the optical disc apparatus, the control section may control the access section such that each of the plurality of border area except for the finalization area includes a border-in area, and such that the border-in area adjoins one of the plurality of bordered area at an outer side and includes an area in which an area combination flag is recorded, the area combination flag indicates that whether or not an outer side adjacent one of the plurality of border area to an outer side adjacent one of the bordered area is the finalization area.

In the optical disc apparatus, the control section may control the access section such that an attribute data is recorded in each of the plurality of the border area, the attribute data indicates a kind of recorded data, and such that a first attribute data of the finalization area is different from a second attribute data of the plurality of border area except for the finalization area.

In the optical disc apparatus, the control section may control the access section such that the first attribute data is a lead-out attribute data.

In the optical disc apparatus, the control section may control the access section such that each of the plurality of border area includes a border-out area, such that the border-out area adjoins one of the plurality of bordered area at an inner side and includes an area in which an dummy data is recorded, and such that a first dummy data of the finalization area is different from a second dummy data of the plurality of border area except for the finalization area.

In order to achieve still another aspect of the present invention, the present invention provides an optical disc apparatus including: a rotation driving system, an access section and a control section. The rotation driving system is configured to rotate an optical disc medium. The optical disc medium includes: a system area in which system data are recorded, and a data area in which user data are recorded. The data area includes: a plurality of bordered areas in which the user data are recorded, and a plurality of border areas each of which separates adjacent two of the plurality of bordered areas. A most outer border area is a finalization area. The most outer border area is one of the plurality of border area and placed at the most outer side. The finalization area is an final area in which data are recorded. A finalization identifying data is recorded in at least one of the plurality of border area. The finalization identifying data identifies that the most outer border area is the finalization area. The control section is configured to control the rotation driving system to rotate the optical disc medium, and to control the access section to irradiate a laser beam such that the finalization identifying data in the at least one of the plurality of border area is read that the most outer border area is recognized as the finalization area.

In the optical disc apparatus, each of the plurality of border area except for the finalization area may include a border-in area. The border-in area adjoins one of the plurality of bordered area at an outer side and includes an area in which an area combination flag is recorded. The area combination flag indicates that whether or not an outer side adjacent one of the plurality of border area to an outer side adjacent one of the bordered area is the finalization area. The control section controls the access section such that the area combination flag is read that the outer side adjacent one of the plurality of border area is recognized as the finalization area.

In the optical disc apparatus, an attribute data may be recorded in each of the plurality of the border area. The attribute data indicates a kind of recorded data. A first attribute data of the finalization area is different from a second attribute data of the plurality of border area except for the finalization area. The control section controls the access section such that the first attribute data is read that one of the plurality of the border area is recognized as the finalization area.

In the optical disc apparatus, the first attribute data may be a lead-out attribute data.

In the optical disc apparatus, each of the plurality of border area may include a border-out area. The border-out area adjoins one of the plurality of bordered area at an inner side and includes an area in which an dummy data is recorded. A first dummy data of the finalization area is different from a second dummy data of the plurality of border area except for the finalization area. The control section controls the access section such that the first dummy data is read that one of the plurality of the border area is recognized as the finalization area. In order to achieve still another aspect of the present invention, the present invention provides a data recording method in an optical disc medium which includes a system area and a data area, the data recording method including: (a) setting a border area and a bordered area in the data area; (b) recording user data in the bordered area; (c) repeating the steps (a) to (b) until recording of the user data is finished; and (d) recording a finalization identifying data in a most outer border area. The finalization identifying data identifies that the most outer border area is a finalization area, the finalization area is an final area in which data are recorded. The most outer border area is placed at the most outer side of the optical disc medium.

In the data recording method, the step (a) may include (a1) setting a border-in area in the border area. The border-in area adjoins the bordered area at an outer side and includes an area in which an area combination flag is recorded. The area combination flag indicates that whether or not the outer side adjacent border area to the outer side adjacent the bordered area is the finalization area. The step (d) may include (d1) recording the area combination flag in the border-in area in a most outer border area.

In the data recording method, the step (b) may include: (b1) setting a border-out area in the border area, and (b2) recording a second attribute data in the border-out area. The step (d) may include (d2) recording a first attribute data in the border-out area in a most outer border area. The first and second attribute data indicate kinds of recorded data.

In the data recording method, the first attribute data may be a lead-out attribute data.

In the data recording method, the step (b) may include (b3) setting a border-out area in the border area, and (b4) recording a second dummy data in the border-out area. The step (d) may include: (d3) recording a first dummy data in the border-out area in a most outer border area.

### Brief Description of the Drawings

Fig. 1 is a block diagram showing the configuration of the data recording system of the present invention;
Fig. 2 is a block diagram showing the configuration of the optical disc apparatus 4 according to the present invention;
Fig. 3 is a diagram showing the format of the recording type optical disc medium 6;
Fig. 4 is a schematic diagram showing the area arrangement on the optical disc medium 6 along the radius direction;
Fig. 5 is a schematic diagram showing an arrangement of various areas in the optical disc medium 6 of the first embodiment;
Fig. 6 is a flowchart showing a recording operation of the first embodiment;
Fig. 7 is a flowchart showing a playing operation of the first embodiment;
Fig. 8 is a schematic diagram showing an arrangement of various areas in the optical disc medium 6 of the second embodiment;
Fig. 9 is a flowchart showing a recording operation of the second embodiment;
Fig. 10 is a flowchart showing a playing operation of the second embodiment;
Fig. 11 is a schematic diagram showing an arrangement of various areas in the optical disc medium 6 of the third embodiment;
Fig. 12 is a flowchart showing a recording operation of the third embodiment; and
Fig. 13 is a flowchart showing a playing operation of the third embodiment.

### Description of the Preferred Embodiments

Hereinafter, a data recording system for an optical disc apparatus using an optical disc medium of the present invention will be described in detail with reference to the attached drawings.

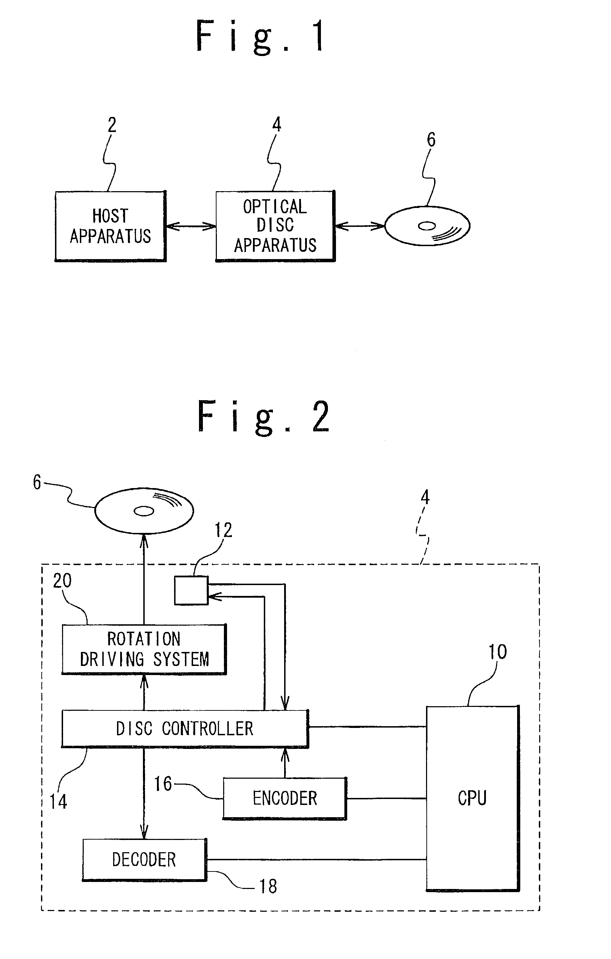

Fig. 1 is a block diagram showing the configuration of the data recording system of the present invention. The data recording system is provided with a host apparatus 2 and an optical disc apparatus 4. The optical disc apparatus 4 is set with an optical disc medium 6 such as a DVD (Digital Versatile Disc), and records data on the optical disc medium 6 or plays the data from the optical disc medium 6, in response to a command from the host apparatus 2. Also, the optical disc apparatus 4 carries out a training process for checking and adjusting a record condition in response to a command from the host apparatus 2 prior to starting the writing operation.

Fig. 2 is a block diagram showing the configuration of the optical disc apparatus 4 according to the present invention. The optical disc apparatus 4 of the first embodiment is provided with a CPU 10, an access section 12, a disc controller 14, an encoder 16, a decoder 18 and a rotation driving system 20. A control section (not shown in Fig. 2) includes the CPU 10, the disc controller 14, the encoder 16 and the decoder 18.

The CPU 10 controls the entire operation of the optical disc apparatus 4. The CPU 10 exchanges commands, instructions, notices and data with the host apparatus 2, and controls the disc controller 14, the encoder 16 and the decoder 18, and also carries out a necessary calculation. The access section 12 contains a laser diode, uses a laser beam to write a data onto the optical disc medium 6 and plays (reads) the data from the optical disc medium 6. The access section 12 is well known to a skilled person in the art. The rotation driving system 20 drives the optical disc medium 6 in response to a command from the CPU 10 so that the optical disc medium 6 is rotated, when the optical disc medium 6 is set.

The disc controller 14 controls the access section 12 and the rotation driving system 20 such that the optical disc medium 6 is rotated, a laser control is carried out and the recording and playing (reading) operations to the data on the optical disc medium 6 are carried out. The disc controller 14 drives the rotation driving system 20 to rotate the optical disc medium 6 in accordance with a command from the CPU 10. Also, the disc controller 14 controls the position of the access section 12 in accordance with a command from the CPU 10, and also controls the operation of the access section 12 in the recording and playing operations. In the recording operation, the disc controller 14 controls the access section 12 to read data necessary to carry out the recording operation from the optical disc medium 6, and to record the data sent from the encoder 16 onto the optical disc medium 6 based on the read-out necessary data. At this time, the access section 12 outputs the laser beam to record the data onto the optical disc medium 6. Also, in the playing operation, the disc controller 14 controls the access section 12 to play the data from the optical disc medium 6. The access section 12 outputs the laser beam to play the data from the optical disc medium 6. The outputted data is sent through the disc controller 14 to the decoder 18.

The encoder 16 carries out an encoding process on user data in response to a command from the CPU 10. For example, in case of the DVD, the encoder 16 generates a record data in units of ECC (error correction code) blocks, each of which includes 16 sectors. The generated record data is sent to the access section 12 through the disc controller 14.

The decoder 18 carries out a decoding process of the data from the optical disc medium 6 in units of the ECC blocks in response to a command from the CPU 10. A configuration in which the ECC block is extended to 32 sectors is proposed in a next generation DVD.

In a recording type optical disc medium 6 such as a DVD-R and a DVD-RW, a spiral groove track for tracking is formed on an optical disc substrate. A multi-layered recording layer made of an organic material and the like is formed thereon. The laser beam with high power is focused on this recording layer to partially change the recording layer and to form record pits. Thus, the data is recorded on the optical disc medium 6. The optical disc medium 6 after the recording operation has the same data format as that of the embossed optical disc ROM medium (DVD-ROM or the like) . Also, since a servo signal having the substantially same characteristics as the optical disc ROM medium can be obtained, the recorded data from the optical disc medium 6 can be played by an playback-only apparatus.

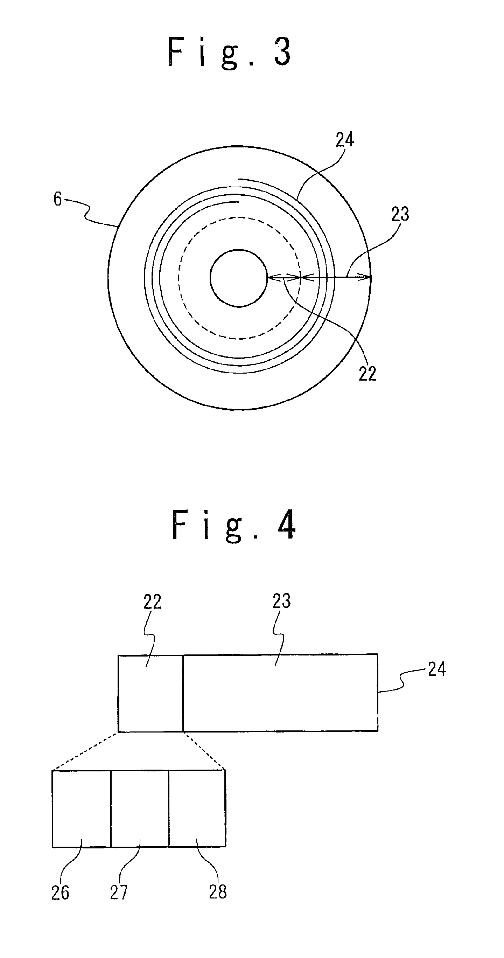

Fig. 3 is a diagram showing the format of the recording type optical disc medium 6. Referring to Fig. 3, the recording type optical disc medium 6 has a system area 22, a data area 23 and a lead-out area (not shown) in a concentric manner from the inner circumference side.

The system area 22 is used to record system data necessary for the recording and playing operations, including disc data and data indicative of a user data area in which user data are recorded. An area in which record control data are recorded to control the optical disc medium 6 and an area used to check record conditions are secured in the system area 22.

The lead-out area indicates the end of the storage area on the optical disc medium 6. When the lead-out area is detected, it is recognized that the recording operation of the data is ended on the optical disc medium 6, and cannot be carried out.

The data area 23 is located between the system area 22 and the lead-out area and is used to record the user data. A spiral recording track 24 is formed in the data area 23.

Fig. 4 is a schematic diagram showing the area arrangement on the optical disc medium 6 along the radius direction. The area arrangement will be described below. In Fig. 4, the left side indicates the inner circumference side of the optical disc medium 6, and the right side indicates the outer circumference side thereof. The system area 22 on the inner circumference side includes system control data necessary when the optical disc apparatus 4 carries out the recording and playing operations, and arrangement data of recorded data on the optical disc medium 6. The system area 22 is roughly classified into three areas of a test record area 26, a record control data area 27 and a user data lead-in area 28.

The user data lead-in area 28 is arranged on the side closest to the data area 23. This area is used to record system control data necessary when already recorded data are played from the recording type optical disc medium 6 by the playback-only optical disc apparatus. That is, an arrangement of the user data is recorded in the user data lead-in area 28.

The record control data area 27 is used to record control data about portions of the data area 23, i.e., data necessary for the optical disc apparatus 4 to record user data in the data area 23. The record control data contains data associating with a next recordable position in the data area 23, and the usage situation of the test record area 26. In accompaniment with the increase in the user data recorded in the data area 23, the data of the record control data area 27 is sequentially updated and increased. Thus, a new record control data is additionally recorded in a predetermined unit from the inner circumference side to the outer circumference side.

The test record area 26 is used for a trial recording operation to check the condition optimal to the recording operation. In order to optimize the recording condition in the data area 23, the trial recording is carried out while a power, a record waveform and the like are changed. Although the inside of the test record area 26 may be used in any order, typically, the outer circumference side is firstly used in many cases.

In such an optical disc medium 6, a border area is provided prior to the finalization such that the playback-only apparatus can play the recorded user data, namely, compatibility with the playback-only apparatus can be attained. An area segmented by the border areas is referred to as a bordered area.

### (First Embodiment)

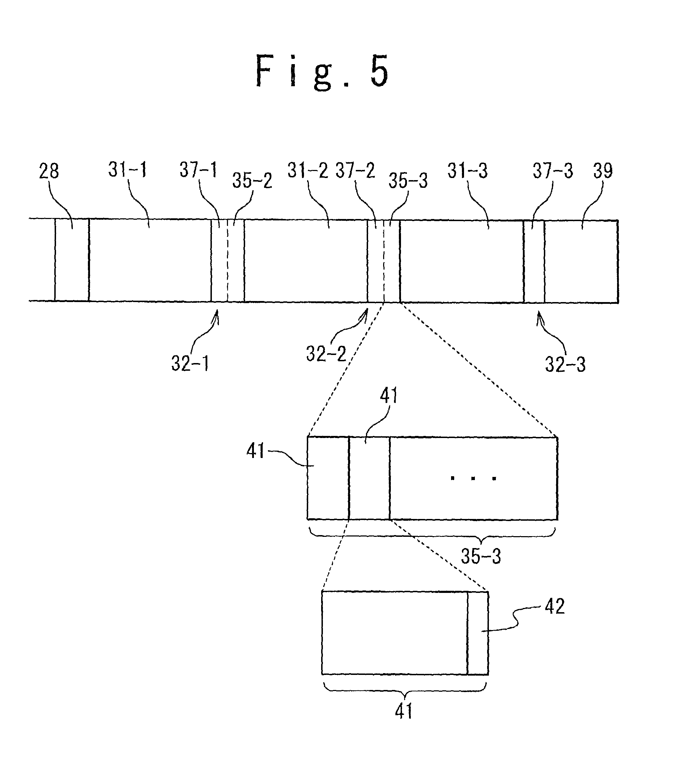

Hereinafter, a first embodiment of the present invention will be explained with reference to Figs. 5 to 7. In the first embodiment, a border-in area in a border area includes a flag that shows a borer area recorded in the most outer side is a finalization area.

Fig. 5 is a schematic diagram showing an arrangement of various areas in the optical disc medium 6 of the first embodiment. Referring to Fig. 5, the arrangement of various areas will be described below. The optical disk medium 6 in the first embodiment includes the data area 23 in the outer side of the user data lead-in area 28 in the system area 22.

As shown in Fig. 5, the data area 23 includes a plurality of bordered areas 31-1 to 31-3 and border areas 32-1 to 32-3. The data area 23 with three bordered areas and three border areas is explained here, however the present invention cannot be limited to that. The border area 32-1 includes a border-out area 37-1 and a border-in area 35-2. The border area 32-2 includes a border-out area 37-2 and a border-in area 35-3. The border area 32-3 includes a border-out area 37-3. In each border-out area, a border-out data is recorded.

That is, the bordered area 31-1, which is on the most inner side, is sandwiched by the user data lead-in area 28 and the border-out area 37-1. The bordered area 31-2 is sandwiched by the border-in area 35-2 and the border-out area 37-2. The bordered area 31-3 is sandwiched by the border-in area 35-3 and the border-out area 37-3.

Border-in data including format data is recorded in the border-in areas 35-2 and 35-3 as well as the user data lead-in area 28. The format data includes a kind of the medium, a version number of the specifications, a position of the following border area and the like. For instance in the DVD-R, the format data with one ECC block length is repeatedly recorded in several times in the border-in data, and the border-in data is recorded in the border-in areas 35-2 and 35-3. Therefore, several numbers of the ECC blocks 41, in which the format data are recorded, are provided in the border-in areas 35-2 and 35-3.

In the first embodiment, the bordered area 31-3 is the most outer area to which the user data are recorded. The outer side of the border area 32-3 is an unrecorded area 39. An area combination flag 42, which shows whether or not the border area 32-3 is finalized, is added and recorded in addition to the format data.

That is, since the area combination flag 42 set in the format data area 41 in the border-in area 35-3 indicates ON, it is shown that the bordered area 31-3 following the border-in area 35-3 is the most outer side area where the user data are to be recorded, and the outer side of the border area 32-3 becomes the unrecorded area 39. Moreover, since the area combination flag 42 indicates OFF in the format data area 41 in the border-in area 35-2, it is shown that the bordered area 31-3 where the user data are to be recorded exists in the outer side of the bordered area 31-2 following the border-in area 35-2.

In this way, as the area combination flag 42 is recorded in the border-in areas 35-2 and 35-3 as a part of the format data, it is possible to omit the user data lead-out area, which has been provided on the most outer side of the optical disk medium 6 so far. As a result, a processing time for recording a user data lead-out data can be reduced, and a recording time can be shortened. Here, an exclusive flag bit may be allocated for the area combination flag. The same function may be achieved by assigning a particular data, such as "00", to specify the following border-in area address.

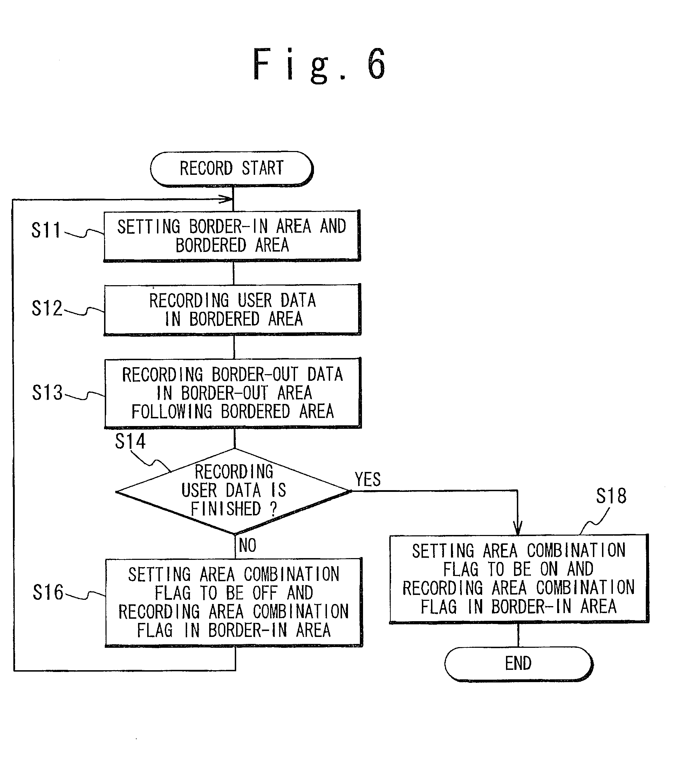

Next, an operation of the first embodiment will be described with reference to attached drawings. Fig. 6 is a flowchart showing a recording operation of the first embodiment. In this recording operation, the optical disc apparatus 4 records the user data to the optical disk medium 6. The optical disc apparatus 4 (CPU 10) sets an area for recording data in the optical disc medium 6 in response to the instruction to record the user data in the optical disk medium 6. In the case that the instruction for recording the additional user data have been received after the user data have been recorded in the range of the bordered area 31-1, the user data are already recorded in the rage of the border-out area 37-1. Therefore, as the start address of the border-in area that records the format data is determined, the optical disc apparatus 4 (CPU 10) sets the end address to clarify the range of the border-in area 35-2. After the range of the border-in area 35-2 is determined, the start address of the bordered area 31-2 adjacent to the border-in area 35-2 is determined. Then, it is possible to record the user data (step S11).

Setting the area for recording the user data, the optical disc apparatus 4 (CPU 10) records the user data in the bordered area 31-2 (step S12). For example of the data recording step, the CPU 10 controls the encoder 16 to encode the data if the data are the user data, and controls disc controller 14, which controls the rotation driving system 20 and the access section 12, to records the data in the predetermined area. Same step may be used for recording of any data in the optical disc medium 6.

After the user data are recorded, the optical disc apparatus 4 (CPU 10) records the border-out data following the bordered area 31-2 in which the user data is recorded. The area, in which the border-out data is recorded, becomes the border-out area 37-2 (step S13).

The optical disc apparatus 4 (CPU 10) receives an instruction from the host apparatus 2 whether or not further additional user data exist, and whether or not the optical disk medium 6 should record any other user data after recording all the user data (step S14).

In case that the additional user data exit (step S14: NO), the optical disc apparatus (CPU 10) 4 sets the area combination flag 42 to be OFF, and then records the area combination flag 42 in the border-in area 35-2 together with the other format data (step S16).

On the other hand in case that the additional data to be recorded in the optical disk medium 6 does not exit after recording all the user data, such as the case that the user data is in the bordered area 31-3 in Fig. 5 (step S14: YES), the optical disc apparatus 4 (CPU 10) sets the area combination flag 42 to be ON, and then records the area combination flag 42 in the border-in area 35-3 together with the other format data. Moreover, the optical disc apparatus 4 (CPU 10) executes the processing needed for finalization, such as recording dummy data in the unrecorded part of the system area 22 (step S18) . The recording into the optical disk medium 6 is completed remaining the unrecorded area 39 without recording the data in the outer side of the border-out area 37-3.

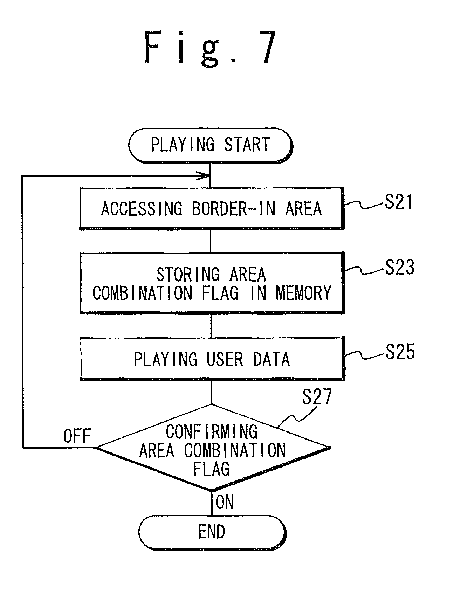

Fig. 7 is a flowchart showing a playing operation of the first embodiment. In this playing operation, the optical disc apparatus 4 plays the user data on the optical disk medium 6. The user data were recorded in the optical disk medium 6 as mentioned above. In the playing of the user data recorded in the optical disk medium 6, the optical disc apparatus 4 (CPU 10) firstly accesses the user data lead-in area and the border-in area in order to read the format data recorded in the user data lead-in data or the border-in data (step S21) . For example of the data reading step, the CPU 10 controls the disc controller 14, which controls the rotation driving system 20 and the access section 12, to reads the data in the predetermined area.

The area combination flag 42 in the loaded format data indicate whether or not the bordered area 31 following the accessed border-in area 35 is the last area in which the user data is recorded. Therefore, the optical disc apparatus 4 (CPU 10) stores the data of the area combination flag 42 in the memory (not shown) (step S23).

The optical disc apparatus 4 (CPU 10) accesses the bordered area 31, reads and plays the user data (step S25) . For example of the user data playing step, the CPU 10 controls disc controller 14, which controls the rotation driving system 20 and the access section 12, to reads the user data in the predetermined area, and controls the decoder 18 to decode and plays the user data.

Finishing the playing of the user data from the bordered area 31, the optical disc apparatus 4 (CPU 10) confirms the data of the area combination flag 42 stored in the step S23 (step S27). In the case of the playing of the user data of the bordered area 31-2, since the area combination flag 42 indicates OFF (the step S27 : OFF), the bordered area 31-3 in which the user data are recorded exist. Therefore, the operation returns to the step S21 and the optical disc apparatus 4 (CPU 10) plays the user data in the following bordered area 31-3.

In the case of the playing of the user data of the bordered area 31-3, since the area combination flag 42 indicates ON (the step S27: ON), the border area 32-3 following the bordered area 31-3 from which the user data are played, is the last area recorded in the optical disk medium 6. Therefore, the playing the user data is finished.

Thus, because the border-in area 35 includes a flag (the area combination flag 42 in the border-in area 35-3), the border-out data in the border area 32-3 (the border-out area 37-3) in the most outer side can be used for the function of the user data lead-out data. Therefore, it is not necessary to allocate the user data lead-out area independently and the record area can be effectively used. Moreover, it is possible to reduce the amount of the recorded data in the optical disk medium 6 and the recording time can be shortened.

### (Second Embodiment)

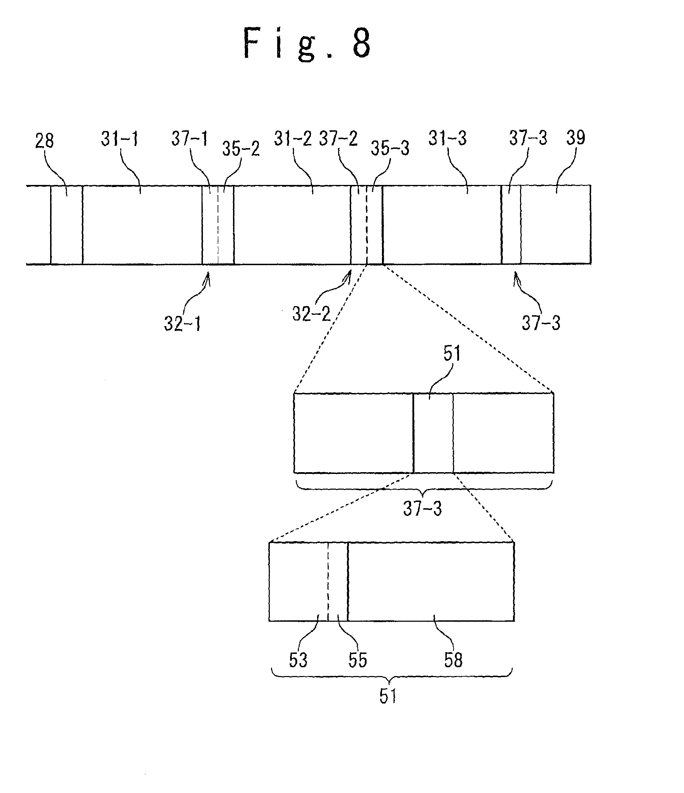

Hereinafter, a second embodiment of the present invention will be explained with reference to Figs. 8 to 10. In the second embodiment, a border-out area in a border area includes a flag that indicates that a border area recorded in the most outer side is a finalization area.

Fig. 8 is a schematic diagram showing an arrangement of various areas in the optical disc medium 6 of the second embodiment. Referring to Fig. 8, the arrangement of various areas will be described below. The optical disk medium 6 in the second embodiment includes the data area 23 in an outer side of the user data lead-in area 28 in the system area 22. As shown in Fig. 8, the data area 23 includes a plurality of bordered areas 31-1 to 31-3 and border areas 32-1 to 32-3. The data area 23 with three bordered areas and three border areas is explained here, however the present invention cannot be limited to that. The border area 32-1 includes a border-out area 37-1 and a border-in area 35-2. The border area 32-2 includes a border-out area 37-2 and a border-in area 35-3. The border area 32-3 includes a border-out area 37-3. In each border-out area, a border-out data is recorded.

That is, the bordered area 31-1, which is on the most inner side, is sandwiched by the user data lead-in area 28 and the border-out area 37-1. The bordered area 31-2 is sandwiched by the border-in area 35-2 and a border-out area 37-2. The bordered area 31-3 is sandwiched by the border-in area 35-3 and the border-out area 37-3.

In these record areas, data are recorded in every sector, which is basic unit of 2 kilobytes for a record area. Therefore, the border-out data are recorded in some sectors 51 in each of the border-out areas 37-1 to 37-3. The sector 51 includes a data area 58 and a head area 53. The data area 58 records data. The header area 53 records a sector address indicating a sequence of recording and playing, additional data and the like. The header area 53 includes an area 55 which records an area type data including an attribute flag. An area type shown in the area type data indicates which area of a record attribute (category) the sector 51 belongs to.

The area type has three kinds of attributes of a lead-in, a data, and a lead-out. The lead-in attribute indicates that the sector belongs to the user data lead-in area 28 and the sector is in the system area. The lead-out attribute indicates that the sector belongs to the user data-out area and the sector is in the system area. The data attribute indicates that the sector belongs to the area where the user data are recorded. That is, the data attribute shows that the sector belongs to the area other than the system area. The border-in area 35 and the border-out area 37 are areas where the user data is recorded usually, and the border-in area 35 and the border-out area 37 have the data attribute.

The lead-out attribute is given to the border-out area 37-3 in the second embodiment. That is, when the optical disc apparatus 4 records the border-out data, the lead-out attribute is given to the sector 51 in the border-out area 37-3 in the case that the recording in the optical disk medium 6 is completed at the border-out area. The lead-out attribute data recorded in the border-out area 37-3 indicates that the border-out area 37-3 is the most outer side of the data recorded areas in the optical disk medium 6, and only unrecorded area 39 exists outside the border-out area 37-3. Having the lead-out attribute data by the border-out area 37-3, it is possible to omit the user data lead-out area, which is conventionally provided in the most outer side of the optical disk medium 6 so far. Therefore, the processing time to record the user data lead-out data can be reduced, and recording time can be shortened. In this example, the border-out area, to which the lead-out attribute is given, has a function of the lead-out area as a simultaneous use. However, another attribute that indicates the simultaneous use may be applied.

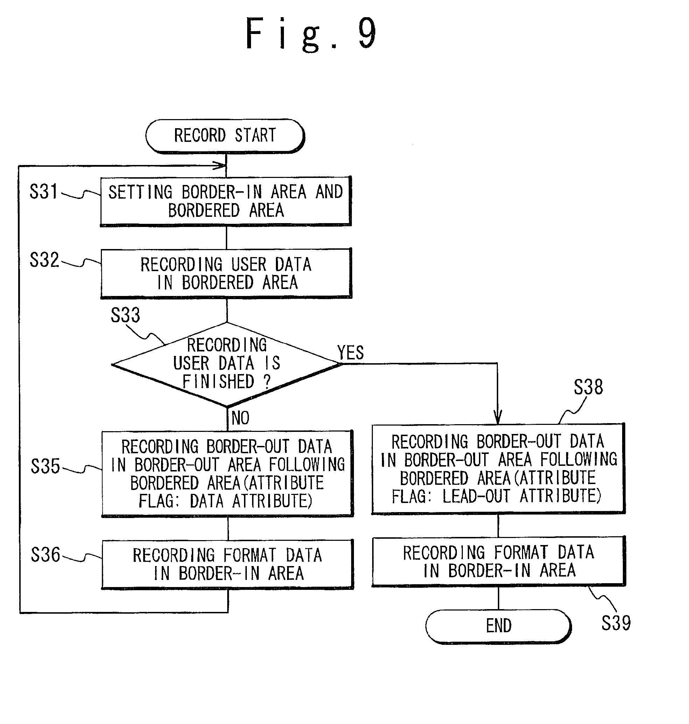

Next, an operation of the second embodiment will be described with reference to attached drawings. Fig. 9 is a flowchart showing a recording operation of the second embodiment. In this recording operation, the optical disc apparatus 4 records the user data to the optical disk medium 6. The optical disc apparatus 4 (CPU 10) sets an area for recording data in the optical disk medium 6 in response to the instruction to record the user data in the optical disk medium 6. In the case that the instruction for recording additional user data have been received after the user data has been recorded in the range of the bordered area 31-1, the user data are already recorded in the range of the border-out area 37-1. Therefore, as the start address of the border-in area that the format data is determined, the optical disc apparatus 4 (CPU 10) sets an end address to clarify the range of the border-in area 35-2. After the range of the border-in area 35-2 is determined, the start address of the bordered area 31-2 adjacent to the border-in area 35-2 is determined. Then, it is possible to record the user data (step S31).

Setting the area to record the user data, the optical disc apparatus 4 (CPU 10) records the user data in the bordered area 31-2 (step S32). For example of the data recording step, the CPU 10 controls the encoder 16 to encode the data if the data are the user data, and controls disc controller 14, which controls the rotation driving system 20 and the access section 12, to records the data in the predetermined area. Same step may be used for recording of any data in the optical disc medium 6.

After the user data are recorded, the optical disc apparatus 4 (CPU 10) receives an instruction from the host apparatus 2 whether or not additional user data exist to be recorded in the optical disk medium 6 after the recording of all the user data (step S33).

In the case that the additional user data exist (step S33: NO), the optical disc apparatus 4 (CPU 10) records the border-out data in the border area 32-2 following the bordered area 31-2 with the recorded user data. At this time, the attribute (attribute flag) given to the border-out area 37-2 is the data attribute. Therefore, the area type 55 that is recorded in the sector 51 is set as the data attribute. Then, the optical disc apparatus 4 (CPU 10) records the border-out data in the border-out area 37-2 (step S35).

Since the border-out data is recorded in the border-out area 37-2, the recording position of the border area 32-2 is defined. Therefore, the position of the following border area for recording the format data is determined. Thus, the format data to be recorded in the border-in area 35-2 is determined, and the optical disc apparatus 4 (CPU 10) records the format data in the border-in area 35-2 (step S36). The optical disc apparatus 4 (CPU 10) receives an instruction from the host apparatus 2 to record the following user data, and then the operation is repeated from the step S31.

In the step S32, when the last user data of the optical disk medium 6 is recorded in the bordered area 31-3, the optical disc apparatus 4 (CPU 10) receives an instruction from the host apparatus 2 whether or not additional user data exist to be recorded in the optical disk medium 6 after the recording of all the user data (step S33) . In the case that the additional user data to record in the optical disk medium 6 does not exist after all the user data is recorded (step S33: YES), the optical disc apparatus 4 (CPU 10) records the border-out data in the area following the bordered area 31-3 in which the user data is recorded. At this time, the attribute (attribute flag) given to the border-out area 37-3 is the lead-out attribute. Therefore, the area type that is recorded in the sector 51 is set as the lead-out attribute. Then, the optical disc apparatus 4 (CPU 10) records the border-out data in the border-out area 37-3 (step S38).

To determine the format data, the optical disc apparatus 4 (CPU 10) records the format data in the border-in area 35-3. Moreover, the optical disc apparatus 4 (CPU 10) executes processing necessary for finalization to the unrecorded part of the system area 22, such as recording a dummy data and the like. Then, the record of the user data in the optical disk medium 6 is completed (step S39). In this example, the border-in data is recorded after the recording the border-out data. However, it is possible to record the border-out data after recording the border-in data.

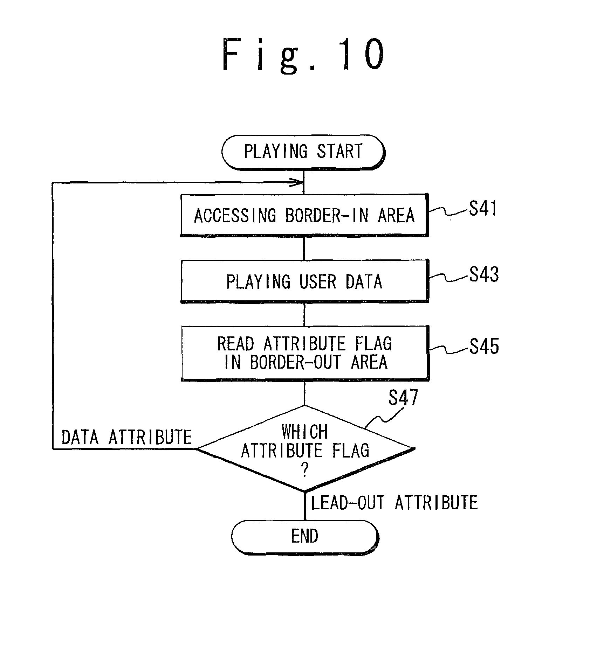

Fig. 10 is a flowchart showing a playing operation of the second embodiment. In this playing operation, the optical disc apparatus 4 plays the user data on the optical disk medium 6. The user data were recorded in the optical disk medium 6 as mentioned above. In the playing of the user data recorded in the optical disk medium 6, the optical disc apparatus 4 (CPU 10) firstly accesses the user data lead-in area and the border-in area in order to read the format data recorded in the user data lead-in data or the border-in data (step S41). The lead-in attribute is given as for an attribute of the user data lead-in area. Moreover, the data attribute is given as for an attribute of the border-in area. For example of the data reading step, the CPU 10 controls the disc controller 14, which controls the rotation driving system 20 and the access section 12, to reads the data in the predetermined area.

The optical disc apparatus 4 (CPU 10) accesses the bordered area 31, where the user data is recorded to be played based on the read format data, and plays the user data (the step S43). The data attribute is given to the bordered area 31. For example of the user data playing step, the CPU 10 controls disc controller 14, which controls the rotation driving system 20 and the access section 12, to reads the user data in the predetermined area, and controls the decoder 18 to decode and play the user data.

Finishing the playing of the user data in the bordered area 31, the optical disc apparatus 4 (CPU 10) accesses the border-out area 37 to read the attribute flag in the area 55 recorded in the border-out area 37 (step S45).

When the accessed border-out area 37 is the border-out area 37-1, the bordered area 31-2 is recorded on the outer side of the border-out area 37-1, and thus the data attribute is given. Similarly, when the accessed border-out area 37 is the border-out area 37-2, the bordered area 31-3 is recorded on the outer side of the border-out area 37-2, and thus the data attribute is given. Therefore, the optical disc apparatus 4 (CPU 10) reads the data attribute as the area type 55, and it can be recognized that this border-out area 37-1 or 37-2 is not the last record area in the optical disk medium 6. That is, when the area type 55 is the data attribute (step S47: data attribute), the operation returns to the step S41 and the optical disc apparatus 4 (CPU 10) reads the user data from the following bordered area 31.

When the accessed border-out area is the border-out area 37-3, the border-out area 37-3 is the last record area in the optical disk medium 6 and the lead-out attribute is given as the area type 55. Therefore, the optical disc apparatus 4 (CPU 10) reads the lead-out attribute as the area type 55, and it is possible to recognize that this border-out area 37-3 is the last record area in the optical disk medium 6. That is, when the area type 55 is the lead-out attribute (step S47: lead-out attribute), the optical disc apparatus 4 (CPU 10) recognizes that the user data is not recorded any more. The optical disc apparatus 4 (CPU 10) finishes playing the user data from the optical disk medium 6.

Thus, the border area 32-3 in the most outer side (the border-out area 37-3) can be used as both the border-out and the user data lead-out simultaneously by using the area type of the sector. Therefore, it is not necessary for to provide the user data lead-out area individually, and the record area can be effectively used. Moreover, it is possible to reduce the amount of the data to be recorded in the optical disk medium 6, and the record time can be shortened.

### (Third Embodiment)

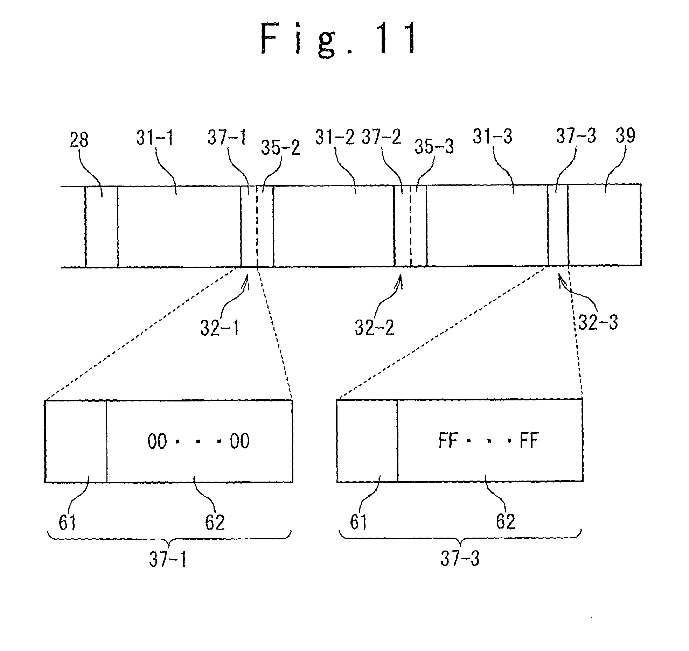

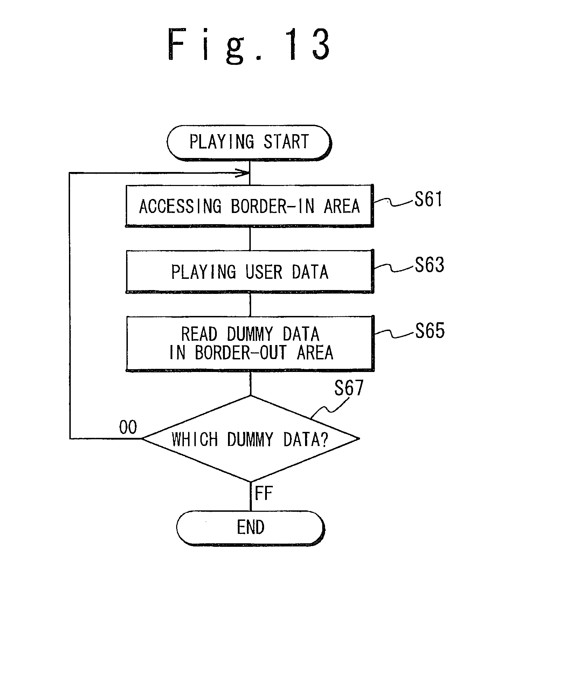

Hereinafter, a third embodiment of the present invention will be explained with referring to Figs. 11 and 13. In the third embodiment, a dummy data that indicates a finalization area is recorded in the border-out area of the most outer side.

Fig. 11 is a schematic diagram showing an arrangement of various areas in the optical disc medium 6 of the third embodiment. Referring to Fig. 11, the arrangement of various areas will be described below. The optical disc medium 6 in the third embodiment includes the data area 23 in the outer side of the user data lead-in area 28 in the system area 22.

As shown in Fig. 11, the data area 23 includes a plurality of the bordered areas 31-1 to 31-3 and the border areas 32-1 to 32-3. The data area with three bordered areas and three border areas is explained here, however the present invention cannot be limited to that. The border area 32-1 includes a border-out area 37-1 and a border-in area 35-2. The border area 32-2 includes a border-out area 37-2 and a border-in area 35-3. The border area 32-3 includes a border-out area 37-3. In each border-out area, a border-out data is recorded.

That is, the bordered area 31-1, which is on the most inner side, is sandwiched by the user data lead-in area 28 and the border-out area 37-1. The bordered area 31-2 is sandwiched by the border-in area 35-2 and a border-out area 37-2. The bordered area 31-3 is sandwiched by the border-in area 35-3 and the border-out area 37-3.

The border-out area 37 includes an area 61 and an area 62. Record control data are recorded in the area 61. The record control data are used when the user data are recorded and played. The dummy data are recorded in the area 62. In the playback-only apparatus, it is not possible to play data if all recorded areas are not sequential. The area 62, where the dummy data is recorded, is an available area such as a reservation area. However, the dummy data are recorded in the area 62 so that the playback-only apparatus for DVD-ROM medium can play a write-once optical medium. For instance, "00" is used as the user data for a conventional DVD-R.

In the third embodiment, different kinds of the dummy data are used according to whether the finalization is executed or not. In order to maintain a compatibility with the conventional method, "00" is used for the dummy data in the case of no finalization as well as the conventional method. "FF" is used (hexadecimal number (notation)) for the dummy data in the case that the finalization is executed in the present invention. However, data pattern is not limited to this. For example, "FF" may be applied to the no finalization, and "00" may be applied to the finalization. Also, the pattern composed of plural octets may be applied to the no finalization and the finalization.

Therefore, since the recorded data are continued to the bordered area 31-2, the dummy data "00" is recorded in the area 62 of the border-out area 37-1. Similarly, since the recorded data are continued to the bordered area 31-3, the dummy data "00" is recorded in the area 62 of the border-out area 37-2. On the other hand, since the recorded data are finished at the bordered area 31-3 which is in the outer side of the optical disc medium 6, the dummy data "FF" is recorded in the area 62 of the border-out area 37-3.

In the playing of the data that are recorded above in the optical disk medium 6, by reading the dummy data in the border-out area, it is possible to recognize whether the border-out area is an area that is followed by the bordered area in the outer side and is not finalized, or the border-out area is in the most outer side and is finalized. If the border-out area is in the most outer side and is not finalized, the user data lead-out area is not necessary for the outer side. That is, it is possible to omit the user data lead-out area, which is conventionally provided in the most outer side of the optical disk medium 6 so far. Therefore, the processing time to record the user data lead-out data can be reduced, and the record time can be shortened.

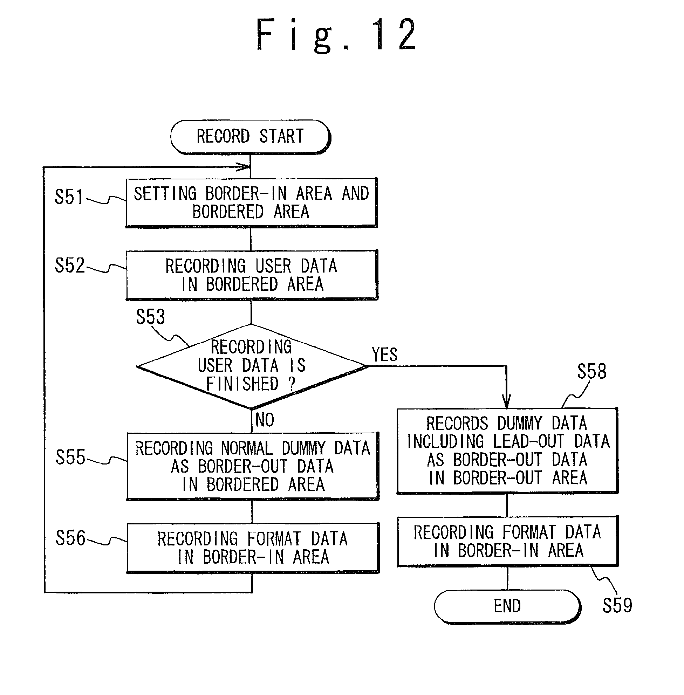

Next, an operation of the third embodiment will be described with reference to attached drawings. Fig. 12 is a flowchart showing a recording operation of the third embodiment. In this recording operation, the optical disc apparatus 4 records the user data to the optical disk medium 6. The optical disc apparatus 4 (CPU 10) sets an area for recording data in the optical disk medium 6 in response to the instruction to record the user data in the optical disk medium 6. In the case that the instruction for recording additional user data has been received after the user data has been recorded in the range of the bordered area 31-1, the user data is already recorded in the range of the border-out area 37-1. Therefore, as the start address of the border-in area that the format data is determined, optical disc apparatus 4 (CPU 10) sets an end address to clarify the range of the border-in area 35-2. After the range of the border-in area 35-2 is determined, the start address of the bordered area 31-2 adjacent to the border-in area 35-2 is determined. Then, it is possible to record the user data (step S51).

Setting the area to record the user data, the optical disc apparatus 4 (CPU 10) records the user data in the bordered area 31-2 (step S52). For example of the data recording step, the CPU 10 controls the encoder 16 to encode the data if the data are the user data, and controls disc controller 14, which controls the rotation driving system 20 and the access section 12, to records the data in the predetermined area. Same step may be used for recording of any data in the optical disc medium 6.

After the user data are recorded, the optical disc apparatus 4 (CPU 10) receives an instruction from the host apparatus 2 whether or not additional user data exist to be recorded in the optical disk medium 6 after the recording of all the user data (step S53).

In the case that the additional user data exist (step S53: NO), the optical disc apparatus 4 (CPU 10) records the border-out data in the bordered area 32-2 following the bordered area 31-2 with the recorded user data. At this time, the dummy data to be recorded in the area 62 of the border-out area 37-2 is set as "00" (step S55).

Since the border-out data is recorded in the border-out area 37-2, and the recording position of the border area 32-2 is defined. Therefore, the position of the following border area for recording the format data is determined. Thus, the format data to be recorded in the border-in area 35-2 is determined, and the optical disc apparatus4 (CPU 10) records the format data in the border-in area 35-2 (step S56). The optical disc apparatus4 (CPU 10) receives an instruction from the host apparatus 2 to record the following user data, and then the operation is repeated from the step S51.

In the step S52, when the last user data of the optical disk medium 6 is recorded in the bordered area 31-3, the optical disc apparatus 4 (CPU 10) receives an instruction from the host apparatus 2 whether or not additional user data exist to be recorded in the optical disk medium 6 after the recording of all the user data (step S53). In the case that the additional user data to record in the optical disk medium 6 does not exist after all the user data is recorded (step S53: YES), the optical disc apparatus 4 (CPU 10) records the border-out data in the area following the bordered area 31-3 in which the user data is recorded. At this time, the dummy data recorded in the area 62 of the border-out area 37-3 is set as "FF" (step S58).

To determine the format data, the optical disc apparatus 4 (CPU 10) records the format data in the border-in area 35-3. Moreover, the optical disc apparatus 4 (CPU 10) executes processing necessary for finalization to the unrecorded part of the system area 22, such as recording a dummy data and the like. Then, the record of the user data in the optical disk medium 6 is completed (step S59). In this example, the border-in data is recorded after the recording the border-out data. However, it is possible to record the border-out data after recording the border-in data.

Fig. 13 is a flowchart showing a playing operation of the third embodiment. In this playing operation, the optical disc apparatus 4 plays the user data on the optical disk medium 6. The user data were recorded in the optical disk medium 6 as mentioned above. In the playing of the user data recorded in the optical disk medium 6, the optical disc apparatus 4 (CPU 10) firstly accesses the user data lead-in area and the border-in area in order to read the format data recorded in the user data lead-in or the border-in (step S61). For example of the data reading step, the CPU 10 controls the disc controller 14, which controls the rotation driving system 20 and the access section 12, to reads the data in the predetermined area.

The optical disc apparatus 4 (CPU 10) accesses the bordered area 31, where the user data are recorded to be played based on the read format data, and plays the user data (the step S63) . For example of the user data playing step, the CPU 10 controls disc controller 14, which controls the rotation driving system 20 and the access section 12, to reads the user data in the predetermined area, and controls the decoder 18 to decode and play the user data.

Finishing the playing of the user data in the bordered area 31, the optical disc apparatus 4 (CPU 10) accesses the border-out area 37 to read the dummy data in the area 66 in the border-out area 37 (step S65).

When the read dummy data is "00" (step S67: "00"), the bordered area exists, where additional user data is recorded. For instance, as for the border-out area 37-2, the bordered area 31-3 exists, and thus the dummy data is "00" . In this case, the operation returns to the step S61 and the optical disc apparatus 4 (CPU 10) plays the following user data of the bordered area 31.

When the read dummy data is "FF" (step S67: "FF"), the bordered area does not exist, where additional user data is recorded. For instance, as for the border-out area 37-3, there is no bordered area following the border area 32-3. That is, the border area 32-3 followed by the bordered area 31-3 from which the user data has been played, is the last area recorded in the optical disk medium 6. In this case, the playing of the user data is completed.

In this way, the dummy data recorded in the area 62 of the border-out area 37 is changed based on whether the finalization is executed or not. Therefore, the border area 32-3 (the border-out area 37-3) which is in the most outer side can be used as both the border-out area and the user data lead-out area simultaneously. Then, it is not necessary to provide the user data lead-out area individually, and the record area can be effectively used. Moreover, it is possible to reduce the amount of the data to be recorded in the optical disk medium 6, and the record time can be shortened.

The first to third embodiments of the present invention have been explained hereof. It should be noted that it is possible to combine at least two of these embodiments.

In the conventional optical disk medium 6, the lead-out area that shows the completion of the record is provided following the border area 32-3. This lead-out area is an area that shows the end of the optical disk medium 6. When the optical disc apparatus 4 (CPU 10) detects the end of the optical disk medium 6 at the playing process, the optical disc apparatus 4 recognizes the end of the whole optical disk medium 6. Conventionally, in order to maintain compatibility with ROM media, many lead-out areas as guard areas are provided based on a specification of the ROM. In the DVD-R, the user data lead-out area occupies the 500 µm or more width in the radial direction of the optical disk medium. On the other hand, the width in the radial direction of the border area can be set less than 500 µm.

According to the three embodiments of the present invention, the area combination flag 42 in the border-in area 35-3, the area type 55 in the border-out area 37-3, or the dummy data in the border-out area 37-3 (finalization identifying data) show that the optical disk medium 6 is finalized by the record of the border area 32-3. Therefore, the lead-out area is not necessary, which is to identify the end of the optical disk medium. As a result, the recording processing for the lead-out area do not need to be executed, and the time for the finalization can be shortened.

Here, to maintain the compatibility with an old version's optical disc medium, the border area in the most outer side such as the border area 32-3 may have data similar to the lead-out area. Even in this case, by using the technique of the above embodiments, the data amount of the border area in the most outer side can be reduced. Therefore, the time for the finalization can be shortened.

It is apparent that the present invention is not limited to the above embodiment, that may be modified and changed without departing form the scope and spirit of the invention.

## Claims

1. An optical disc medium comprising:
a system area (22) in which system data are recorded, and
a data area (23) in which user data are recorded,
wherein said data area (23) includes:
a plurality of bordered areas (31) in which said user data are recorded, and
a plurality of border areas (32) each of which separates adjacent two of said plurality of bordered areas (31),
wherein a most outer border area (32-3) is a finalization area, said most outer border area is one of said plurality of border areas (32) and placed at the most outer side, and said finalization area is an final area in which data are recorded.

2. The optical disc medium according to claim 1, wherein a finalization identifying data is recorded in at least one of said plurality of border areas (32), and
said finalization identifying data identifies that said most outer border area (32-3) is said finalization area.

3. The optical disc medium according to claim 2, wherein each of said plurality of border areas (32) except for said finalization area (32-3) includes a border-in area (35),
said border-in area (35) adjoins one of said plurality of bordered areas (31) at an outer side and includes an area in which an area combination flag (42) is recorded, and
said area combination flag (42) indicates that whether or not an outer side adjacent one of said plurality of border areas (32) to an outer side adjacent one of said bordered area (31) is said finalization area.

4. The optical disc medium according to claim 2, wherein an attribute data is recorded in each of said plurality of said border areas (32),
said attribute data indicates a kind of recorded data, and
a first attribute data of said finalization area (32-3) is different from a second attribute data of said plurality of border areas (32) except for said finalization area (32-3).

5. The optical disc medium according to claim 4, wherein said first attribute data is a lead-out attribute data.

6. The optical disc medium according to claim 2, wherein each of said plurality of border areas (32) includes a border-out area (37),
said border-out area (37) adjoins one of said plurality of bordered areas (31) at an inner side and includes an area in which an dummy data (42) is recorded, and
a first dummy data of said finalization area (32-3) is different from a second dummy data of said plurality of border areas (32) except for said finalization area (32-3).

7. The optical disc medium according to claim 6, wherein said first dummy data is FF in hexadecimal notation.

8. An optical disc apparatus comprising:
a rotation driving system (20) configured to rotate an optical disc medium (6),
wherein said optical disc medium comprising:
a system area (22), in which system data are recorded, and
a data area (23), in which user data are recorded;
an access section (12); and
a control section (10,14,16,18) configured to control said rotation driving system (20) to rotate said optical disc medium (6), and to encode record data and to control said access section (12) to irradiate a laser beam such that the encoded record data is recorded on said optical disc medium (6) as said user data,
wherein said control section (10,14,16,18) controls said access section (12) such that said user data are recorded in a plurality of bordered areas (31) in said data area (23),
such that each of a plurality of border areas (32) separates adjacent two of said plurality of bordered areas (31),
such that a most outer border area (32-3) is a finalization area, said most outer border area is one of said plurality of border areas (32) and placed at the most outer side, said finalization area is an final area in which data are recorded, and
such that a finalization identifying data is recorded in at least one of said plurality of border areas (32), said finalization identifying data identifies that said most outer border area (32-3) is said finalization area.

9. The optical disc apparatus according to claim 8, wherein said control section (10,14,16,18) controls said access section (12) such that each of said plurality of border areas (32) except for said finalization area (32-3) includes a border-in area (35), and
such that said border-in area (35) adjoins one of said plurality of bordered areas (31) at an outer side and includes an area in which an area combination flag (42) is recorded, said area combination flag (42) indicates that whether or not an outer side adjacent one of said plurality of border areas (32) to an outer side adjacent one of said bordered area (31) is said finalization area.

10. The optical disc apparatus according to claim 8, wherein said control section (10,19,16,18) controls said access section (12) such that an attribute data is recorded in each of said plurality of said border areas (32), said attribute data indicates a kind of recorded data, and
such that a first attribute data of said finalization area (32-3) is different from a second attribute data of said plurality of border areas (32) except for said finalization area (32-3).

11. The optical disc apparatus according to claim 10, wherein said control section (10, 14, 16, 18) controls said access section (12) such that said first attribute data is a lead-out attribute data.

12. The optical disc apparatus according to claim 8,
wherein said control section (10, 14, 16, 18) controls said access section (12) such that each of said plurality of border areas (32) includes a border-out area (37),
such that said border-out area (37) adjoins one of said plurality of bordered areas (31) at an inner side and includes an area in which an dummy data (42) is recorded, and
such that a first dummy data of said finalization area (32-3) is different from a second dummy data of said plurality of border areas (32) except for said finalization area (32-3).

13. An optical disc apparatus comprising:
a rotation driving system (20) configured to rotate an optical disc medium (6),
wherein said optical disc medium comprising:
a system area (22) in which system data are recorded, and
a data area (23) in which user data are recorded;
said data area (23) includes:
a plurality of bordered areas (31) in which said user data are recorded, and
a plurality of border areas (32) each of which separates adjacent two of said plurality of bordered areas (31),
a most outer border area (32-3) is a finalization area, said most outer border area is one of said plurality of border areas (32) and placed at the most outer side, and said finalization area is an final area in which data are recorded, and
a finalization identifying data is recorded in at least one of said plurality of border areas (32), said finalization identifying data identifies that said most outer border area (32-3) is said finalization area;
an access section (12); and
a control section (10, 14, 16, 18) configured to control said rotation driving system (20) to rotate said optical disc medium (6), and to control said access section (12) to irradiate a laser beam such that said finalization identifying data in said at least one of said plurality of border areas (32) is read that said most outer border area (32-3) is recognized as said finalization area (32-3).

14. The optical disc apparatus according to claim 13, wherein each of said plurality of border areas (32) except for said finalization area (32-3) includes a border-in area (35),
said border-in area (35) adjoins one of said plurality of bordered areas (31) at an outer side and includes an area in which an area combination flag (42) is recorded,
said area combination flag (42) indicates that whether or not an outer side adjacent one of said plurality of border areas (32) to an outer side adjacent one of said bordered area (31) is said finalization area, and
said control section (10,14,16,18) controls said access section (12) such that said area combination flag (42) is read that said outer side adjacent one of said plurality of border areas (32) is recognized as said finalization area (32-3).

15. The optical disc apparatus according to claim 13, wherein an attribute data is recorded in each of said plurality of said border areas (32), said attribute data indicates a kind of recorded data, and
a first attribute data of said finalization area (32-3) is different from a second attribute data of said plurality of border areas (32) except for said finalization area (32-3), and
said control section (10,14,16,18) controls said access section (12) such that said first attribute data is read that one of said plurality of said border areas (32) is recognized as said finalization area (32-3).

16. The optical disc apparatus according to claim 15, wherein said first attribute data is a lead-out attribute data.

17. The optical disc apparatus according to claim 13, wherein each of said plurality of border areas (32) includes a border-out area (37),
said border-out area (37) adjoins one of said plurality of bordered areas (31) at an inner side and includes an area in which an dummy data (42) is recorded,
a first dummy data of said finalization area (32-3) is different from a second dummy data of said plurality of border areas (32) except for said finalization area (32-3), and
said control section (10,14,16,18) controls said access section (12) such that said first dummy data is read that one of said plurality of said border areas (32) is recognized as said finalization area (32-3) .

18. A data recording method in an optical disc medium which comprises a system area (22) and a data area (23), said data recording method comprising:
(a) setting a border area (32) and a bordered area (31) in said data area (23);
(b) recording user data in said bordered area (31) ;
(c) repeating said steps (a) to (b) until recording of said user data is finished; and
(d) recording a finalization identifying data in a most outer border area (32),
wherein said finalization identifying data identifies that said most outer border area (32-3) is a finalization area, said finalization area (32-3) is an final area in which data are recorded, and said most outer border area (32-3) is placed at the most outer side of said optical disc medium (6).

19. The data recording method according to claim 18, wherein said step (a) includes:
(a1) setting a border-in area (35) in said border area (32),
said border-in area (35) adjoins said bordered area (31) at an outer side and includes an area in which an area combination flag (42) is recorded,
said area combination flag (42) indicates that whether or not said outer side adjacent border area (32) to an said outer side adjacent the bordered area (31) is said finalization area, and
said step (d) includes:
(d1) recording said area combination flag (42) in said border-in area (35) in a most outer border area (32) .

20. The data recording method according to claim 18, wherein said step (b) includes:
(b1) setting a border-out area (37) in said border area (32), and
(b2) recording a second attribute data in said border-out area (37),
said step (d) includes:
(d2) recording a first attribute data in said border-out area (37) in a most outer border area (32),
said first and second attribute data indicate kinds of recorded data.

21. The data recording method according to claim 20, wherein said first attribute data is a lead-out attribute data.

22. The data recording method according to claim 18, wherein said step (b) includes:
(b3) setting a border-out area (37) in said border area (32), and
(b4) recording a second dummy data (42) in said border-out area (37),
said step (d) includes:
(d3) recording a first dummy data (42) in said border-out area (37) in a most outer border area (32) .
